# EUROPÄISCHE PATENTANMELDUNG

(11) **EP 1 329 415 A1**
(43) Veröffentlichungstag der Anmeldung: **23.07.2003**
(21) Anmeldenummer: 03000206.7
(22) Anmeldetag: 07.01.2003
(51) Int. Cl.: B66F 9/075, B62D 1/16

(54) **Lenkeinheit für ein Flurförderzeug**

(30) Priorität: 18.01.2002 DE 10201831
(71) Anmelder: STILL GMBH, D-22113 Hamburg (DE)
(72) Erfinder: Kettenburg, Hans-Jörg, 22119 Hamburg (DE); Logemann, Ulf, 21447 Brackel (DE)
(74) Vertreter: Lang, Michael (DE)

(57) **Zusammenfassung**

Gegenstand der Erfindung ist eine Lenkeinheit für ein Flurförderzeug mit einem Lenkbetätigungselement, das über eine Lenksäule (2) an einem Rahmen (1) des Flurförderzeugs befestigt ist. Ein Gelenkelement ist vorgesehen, das ein Schwenken der Lenksäule (2) relativ zu dem Rahmen (1) des Flurförderzeugs ermöglicht und ein Dämpfungselement ist vorgesehen, das die Übertragung von Schwingungen von dem Rahmen (1) des Flurförderzeugs auf die Lenksäule (2) vermindert. Erfindungsgemäß ist mindestens ein Lagerbauteil (5) vorgesehen, welches gleichzeitig das Gelenkelement und das Dämpfungselement bildet. Das Lagerbauteil (5) weist ein gummielastisches Element auf.

## Beschreibung

Die Erfindung betrifft eine Lenkeinheit für ein Flurförderzeug mit einem Lenkbetätigungselement, das über eine Lenksäule an einem Rahmen des Flurförderzeugs befestigt ist, wobei ein Gelenkelement vorgesehen ist, das ein Schwenken der Lenksäule relativ zu dem Rahmen des Flurförderzgugs ermöglicht und ein Dämpfungselement vorgesehen ist, das die Übertragung von Schwingungen von dem Rahmen des Flurförderzeugs auf die Lenksäule vermindert.

Lenkeinheiten dieser Art werden häufig in Flurförderzeugen und anderen Nutzfahrzeugen eingesetzt. Durch die mit dem Gelenkelement erreichte Neigbarkeit der Lenksäule kann die Bedienperson die Position und Lage des in der Regel von einem Lenkrad gebildeten Lenkbetätigungselements auf ihre persönlichen Bedürfnisse anpassen. Die von der Bedienperson gewählte Neigungsposition des Lenkrads kann dann beispielsweise mit einer Klemmschraube fixiert werden. Das Dämpfungselement verhindert, dass beispielsweise von einem Antriebsmotor hervorgerufene Schwingungen in unangenehmem Maße auf das Lenkrad übertragen werden. An der Lenksäule können neben dem Lenkrad zusätzlich Verkleidungselemente und weitere Bedienelemente oder Anzeigeelemente angeordnet sein. Ebenso können an der Lenksäule beispielsweise ein hydraulisches Lenkventil oder ein elektrischer Lenksensor angeordnet sein, mit welchen die Stellung oder Bewegungen des Lenkrads erfasst und als hydraulisches bzw. elektrisches Signal weitergegeben werden. Die Verbindungen des Gelenkelements und des Dämpfungselements mit dem Rahmen oder mit der Lenksäule können direkt oder indirekt über dazwischen angeordnete Bauteile ausgeführt sein.

In einer bekannten Konstruktion ist das Gelenkelement als metallisches Scharniergelenk ausgeführt, wobei ein erstes Teil des Scharniergelenks mit dem Rahmen verbunden ist. An dem relativ zu dem ersten Teil verdrehbaren zweiten Teil des Scharniergelenks ist das Dämpfungselement angeordnet. An dem Dämpfungselement wiederum ist die Lenksäule befestigt.

Der vorliegenden Erfindung liegt die Aufgabe zugrunde, eine Lenkeinheit zur Verfügung zu stellen, die mit reduzierter Teileanzahl und geringerem Montageaufwand herstellbar ist.

Diese Aufgabe wird erfindungsgemäß dadurch gelöst, dass mindestens ein Lagerbauteil vorgesehen ist, welches gleichzeitig das Gelenkelement und das Dämpfungselement bildet. Das Lagerbauteil erfüllt dabei die Funktionen Schwingungsdämpfung und bewegliche Lagerung in einem einzigen Bauteil.

Besonders zweckmäßig ist es, wenn das Lagerbauteil ein gummielastisches Element aufweist. Das gummielastische Element dient dabei einerseits zur Dämpfung des Lenksäule gegenüber Schwingungen des Rahmens.

Andererseits ist das gummielastische Element derart angeordnet, dass es bei einem Schwenken der Lenksäule verformt wird. Das Ausmaß der Verformung bewegt sich dabei stets im elastischen Bereich.

Zweckmäßigerweise ist das gummielastische Element des Lagerbauteils einerseits mit dem Rahmen des Flurförderzeugs und andererseits mit der Lenksäule verbunden. Die Verbindungen können dabei direkt oder indirekt über dazwischen angeordnete Bauteile ausgeführt sein.

Unerwünschte Bewegungen der Lenksäule können vermieden werden, wenn der Lenksäule zwei voneinander beabstandete Lagerbauteile zugeordnet sind. Hierdurch wird erreicht, dass trotz der elastischen Lagerung insbesondere ein seitliches Neigen der Lenksäule verhindert wird.

Weitere Vorteile und Einzelheiten der Erfindung werden anhand des in der schematischen Figur dargestellten Ausführungsbeispiels näher erläutert.

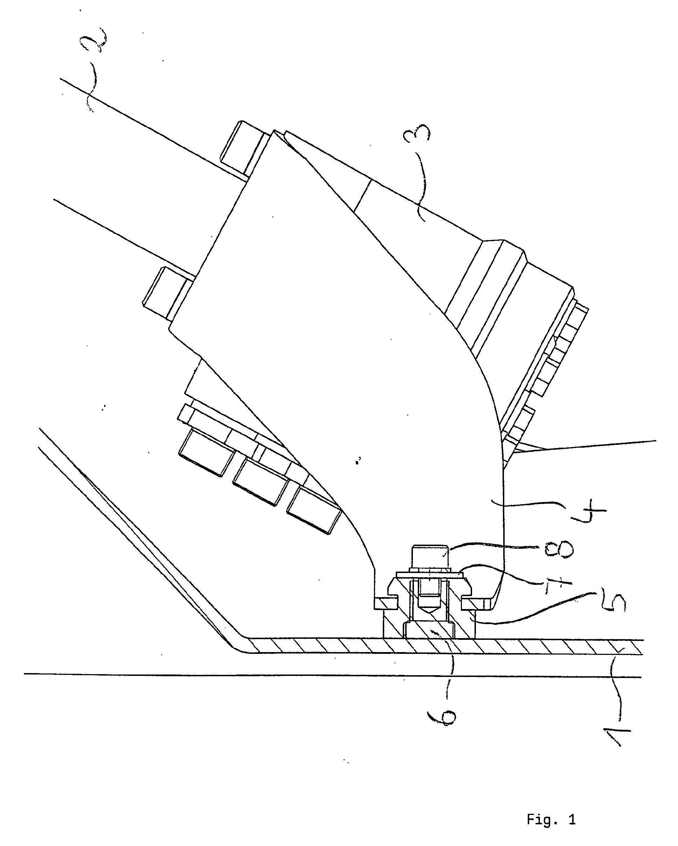

Die Figur zeigt einen Ausschnitt einer Lenkeinheit im Bereich der Befestigung an dem Rahmen 1 eines Flurförderzeugs. Zu erkennen ist eine Lenksäule 2, an deren oberem Ende ein als Lenkrad ausgebildetes Lenkbetätigungselement drehbar befestigt ist. Am unteren Ende der Lenksäule befindet sich in diesem Ausführungsbeispiel ein hydraulisches Lenkventil 3, mit dem die Drehbewegung des Lenkrads in ein hydraulisches Signal umgewandelt wird. Die Verbindung der Lenksäule 2 mit dem Rahmen 1 erfolgt über ein gebogenes Halteblech 4, ein gummielastisches Lagerbauteil 5 und einen an den Rahmen 1 angeschweißten Bolzen 6. Das Halteblech 4 weist hierbei einen kreisförmigen Ausschnitt auf, dessen Kante in eine Nut am gummielastischen Lagerbauteil 5 eingerastet ist. Das Lagerbauteil 5 wiederum ist auf den mit dem Rahmen starr verbundenen Bolzen 6 aufgesteckt. Die Verbindung des Lagerbauteils 5 mit dem Bolzen 6 und des Halteblechs 4 mit dem Lagerbauteil 5 wird mittels einer Scheibe 7 und einer in ein Innengewinde des Bolzens 6 eingeschraubten Schraube 8 gesichert.

Das gummielastische Lagerbauteil 5 ermöglicht ein Schwenken der Lenksäule 2 um eine auf die Zeichenebene senkrecht stehende Achse. Die hierbei auftretende Relativbewegung zwischen dem Halteblech 4 und dem Bolzen 6 wird durch elastische Verformung des Lagerbauteils 5 ausgeglichen. Damit erfüllt das Lagerbauteil 5 die Funktion eines Gelenkelements.

Darüber hinaus hat das Lagerbauteil 5 aufgrund seiner gummielastischen Eigenschaften die Funktion eines Dämpfungselements gegenüber Schwingungen des Rahmens 1. Dadurch, dass keine direkte mechanische Verbindung zwischen Rahmen 1 und Halteblech 4 besteht, werden Schwingungen nur in geringem Umfang auf das Halteblech 4 der Lenksäule 2 übertragen.

Insgesamt sind zwei Befestigungspunkte für das Halteblech 4 am Rahmen 1 vorgesehen, die, identisch ausgeführt, jeweils einen Bolzen 6, ein Lagerbauteil 5, eine Scheibe 7 und eine Schraube 8 aufweisen. Die Befestigungspunkte sind in horizontaler Richtung voneinander beabstandet, derart, dass die Befestigungspunkte sich in der vorliegenden Darstellung gegenseitig verdecken. Der Abstand der Befestigungspunkte beträgt ca. 30 Zentimeter. Somit ist sichergestellt, dass eine Schwenkbarkeit der Lenksäule aufgrund der Elastizität der Lagerbauteile 5 um eine parallel zur Zeichenebene angeordnete Achse vernachlässigbar gering ist.

## Patentansprüche

1. Lenkeinheit für ein Flurförderzeug mit einem Lenkbetätigungselement, das über eine Lenksäule (2) an einem Rahmen (1) des Flurförderzeugs befestigt ist, wobei ein Gelenkelement vorgesehen ist, das ein Schwenken der Lenksäule (2) relativ zu dem Rahmen (1) des Flurförderzeugs ermöglicht und ein Dämpfungselement vorgesehen ist, das die Übertragung von Schwingungen von dem Rahmen (1) des Flurförderzeugs auf die Lenksäule (2) vermindert, **dadurch gekennzeichnet, dass** mindestens ein Lagerbauteil (5) vorgesehen ist, welches gleichzeitig das Gelenkelement und das Dämpfungselement bildet.

2. Lenkeinheit nach Anspruch 1, **dadurch gekennzeichnet, dass** das Lagerbauteil (5) ein gummielastisches Element aufweist.

3. Lenkeinheit nach Anspruch 2, **dadurch gekennzeichnet, dass** das gummielastische Element derart angeordnet ist, dass es bei einem Schwenken der Lenksäule (2) verformt wird.

4. Lenkeinheit nach Anspruch 2 oder 3, **dadurch gekennzeichnet, dass** das gummielastische Element des Lagerbauteils (5) einerseits mit dem Rahmen (1) des Flurförderzeugs verbunden ist und andererseits mit der Lenksäule (2) verbunden ist.

5. Lenkeinheit nach einem der Ansprüche 1 bis 4, **dadurch gekennzeichnet, dass** der Lenksäule (2) zwei voneinander beabstandete Lagerbauteile (5) zugeordnet sind.
